# EUROPÄISCHE PATENTANMELDUNG

(11) **EP 1 609 550 A1**
(43) Veröffentlichungstag der Anmeldung: **28.12.2005**
(21) Anmeldenummer: 05104994.8
(22) Anmeldetag: 08.06.2005
(51) Int. Cl.: B23B 31/11, B23B 31/00

(54) **Verbindungssystem und Werkzeugteil**

(30) Priorität: 21.06.2004 DE 102004029974
(71) Anmelder: Sandvik Intellectual Property AB, 811 81 Sandviken (SE)
(72) Erfinder: Neumann, Jens, 98590 Wernshausen (DE); Frank, Peter, 98593 Floh-Seligenthal (DE)
(74) Vertreter: Weber, Dieter

(57) **Zusammenfassung**

Die vorliegende Erfindung betrifft ein Verbindungssystem zur ausgerichteten Verbindung zweier Werkzeugteile. Um ein solches Verbindungssystem zur ausgerichteten Verbindung zweier Werkzeugteile zur Verfügung zu stellen, das einfach und kostengünstig herzustellen ist, das eine exakte Ausrichtung sowohl in axialer als auch in radialer Richtung ermöglicht und bei dem auf das Vorsehen einer zusätzlichen Abdrückeinrichtung verzichtet werden kann, wird erfindungsgemäß vorgeschlagen, daß das Verbindungssystem mit Mitteln (12) zum Befestigen der beiden Werkzeugteile und Mitteln (3, 4, 8, 9) zum Ausrichten der beiden Werkzeugteile zueinander ausgestattet ist, wobei die Ausrichtungsmittel (3, 4, 8, 9) aus einem an dem ersten Werkzeugteil vorgesehen Zapfen (3) mit nichtkreisförmigem Querschnitt und einer an dem zweiten Werkzeugteil vorgesehenen Aussparung (8) bestehen, die derart aneinander angepaßt sind, daß zur Ausrichtung der beiden Werkzeugteile (1, 7) der Zapfen (3) in die Aussparung (8) eingreifen kann, und wobei das Querschnittsmaß des Zapfens (3) kleiner oder gleich dem Querschnittsmaß der Aussparung (8) ist.

## Beschreibung

Die vorliegende Erfindung betrifft ein Verbindungssystem zur ausgerichteten Verbindung zweier Werkzeugteile.

Insbesondere bei rotierenden Werkzeugen für die spanabhebende Bearbeitung gibt es eine Vielzahl von Schnittstellen zwischen den unterschiedlichen Werkzeugleilen. Häufig ist es dabei von Bedeutung, in welcher Ausrichtung die beiden Werkzeugteile aneinander befestigt werden. Trägt beispielsweise eines der beiden Werkzeugteile eine Schneidplatte, so ist im allgemeinen eine exakte Ausrichtung der beiden Werkzeugteile zueinander vonnöten, um ein zufriedenstellendes Schneidergebnis zu erzielen.

So ist beispielsweise aus der CH 690 358 A5 ein Verbindungssystem bekannt für die Befestigung eines Schneidenhalters an einem Werkzeugträger eines Ausdrehkopfes. Der Schneidenhalter weist hier eine Nut auf, die auf einen entsprechend ausgeformten Mitnahmekeil des Werkzeughalters aufgesetzt wird. Die Befestigung erfolgt dann mit Hilfe einer Schraubverbindung. Die Nut ist im wesentlichen in Umfangsrichtung des Werkzeugträgers angeordnet, so daß durch Aufsetzen des Plattenhalters auf den Werkzeugträgers eine Ausrichtung bzw. Positionierung des Schneidplattenhalters in axialer Richtung erfolgt. In radialer Richtung erfolgt dagegen die Ausrichtung ausschließlich durch die Spannschraube, was jedoch zu geringfügigen Fehlausrichtungen führen kann.

Weiterhin ist bei diesem Befestigungssystem vorgesehen, daß der Mitnahmekeil ein Übermaß aufweist, so daß es bei dem Aufsetzen des Schneidplattenhalters auf dem Mitnahmekeil und Festziehen des Schneidplattenhalters mit Hilfe einer Spannschraube zu einer elastischen Verformung des Schneidplattenhalters und/oder des Werkzeugträgers kommt. Dies stellt zwar eine spielfreie Verbindung sicher und weiterhin ist es möglich über die Nut auf den Mitnahmekeil und damit auf dem Schneidplattenhalter eine Kraft auszuüben, so daß jegliche Kräfte, die auf Werkzeugträger und/oder Schneidplattenhalter ausgeübt werden, über die Flächen des Mitnahmekeils bzw. der Nut abgetragen werden kann. Jedoch gestaltet sich das Lösen des Schneidplattenhalters vom Werkzeugträger schwierig, da aufgrund der elastischen Verformung von Nut und/oder Keil der Plattenhalter auch nach Lösen der Spannschraube fest auf dem Mitnahmekeil sitzt. Häufig muß daher zusätzlich ein Abdrückmechanismus, beispielsweise in Form einer Schraube, deren Fuß beim Festziehen der Schraube den Schneidplattenhalter von dem Werkzeugträger wegdrückt, vorgesehen werden.

In der EP 0 294 348 ist bereits ein Verbindungssystem beschrieben, bei dem ein erstes Werkzeugteil einen stumpfförmigen Vorsprung hat, welcher einem zweiten Werkzeugteil zugewandt ist, während das zweite Werkzeugteil einen Sitz aufweist, der durch eine sich verjüngende Aussparung definiert ist, um den Vorsprung des ersten Teils aufzunehmen. Weiterhin sind bei diesem Befestigungssystem Einrichtungen für das Festspannen des ersten Werkzeugteils an dem zweiten Werkzeugteil vorgesehen. Sowohl der Vorsprung als auch die Aussparung haben einen nicht kreisförmigen Querschnitt. Auch hier ist jedoch vorgesehen, daß der Vorsprung ein Übermaß hat, so daß es beim Einsetzen des Vorsprungs in die Aussparung zu einer elastischen Dehnung des Vorsprungs und/oder der Aussparung kommt. Grundsätzlich ist mit diesen Verbindungssystem eine exakte Ausrichtung der beiden Werkzeugteile zueinander möglich. Auch hier ist jedoch auch kein einfaches Lösen der beiden Werkzeugteile voneinander möglich, da nach dem Lösen der Spannschraube das eine Werkzeugteil dennoch fest auf dem zweiten Werkzeugteil aufsitzt. Es muß daher eine entsprechende Abdrückvorrichtung vorhanden sein, mit deren Hilfe das eine Werkzeugteil von dem anderen Werkzeugteil abgedrückt werden kann.

Die im Stand der Technik beschriebenen Befestigungssysteme erlauben entweder keine einfache Ausrichtung der beiden Werkzeugteile zueinander oder sind nur für relativ große Werkzeuge geeignet, in denen die zusätzliche Abdrückvorrichtung integriert werden kann.

Ausgehend von diesem Stand der Technik ist es daher Aufgabe der Erfindung, ein Verbindungssystem zur ausgerichteten Verbindung zweier Werkzeugteile zur Verfügung zu stellen, das einfach und kostengünstig herzustellen ist, das eine exakte Ausrichtung sowohl in axialer als auch in radialer Richtung ermöglicht und bei dem auf das Vorsehen einer zusätzlichen Abdrückeinrichtung verzichtet werden kann.

Diese Aufgabe wird erfindungsgemäß durch ein Verbindungssystem gelöst mit Mitteln zum Verbinden der beiden Werkzeugteile und Mitteln zum Ausrichten der beiden Werkzeugteile zueinander, wobei die Ausrichtungsmittel aus einem an dem ersten Werkzeugteil vorgesehenen Zapfen mit nicht kreisförmigem Querschnitt und einer an dem zweiten Werkzeugteil vorgesehenen Aussparung bestehen, die derart aneinander angepaßt sind, daß zur Ausrichtung der beiden Werkzeugteile der Zapfen in die Ausnehmung eingreifen kann, und wobei das Querschnittsmaß des Zapfens kleiner oder gleich dem Querschnittsmaß der Aussparung ist.

Mit anderen Worten entspricht das erfinderische Verbindungssystem im wesentlichen dem in der EP 0 294 348 beschriebenen Verbindungssystem, wobei hier jedoch erfindungsgemäß auf das Übermaß verzichtet wurde. Es hat sich nämlich überraschenderweise gezeigt, daß auch ohne Übermaß eine hinreichend genaue Ausrichtung der beiden Werkzeugteile zueinander möglich ist und alle axial und radial wirkenden Kräfte auf das eine Werkzeugteil allein über die Verbindungsmittel abgeleitet werden können. Unter dem Begriff Zapfen wird ganz allgemein jeder beliebige Vorsprung verstanden. Es versteht sich, daß der Zapfen beispielsweise auch konisch ausgeführt sein könnte.

Genau genommen dient daher der Zapfen und die Aussparung erfindungsgemäß lediglich zum Ausrichten und ist nicht Teil einer kraft- und formschlüssigen Verbindung.

Es ist besonders zweckmäßig, wenn das Querschnittsmaß des Zapfens kleiner als das Querschnittsmaß der Aussparung ist. Dadurch wird sichergestellt, daß selbst aufgrund von Fertigungstoleranzen und/oder innerhalb des Werkzeugs auftretenden Temperaturgradienten, die wiederum zu einem unterschiedlichen Ausdehnungsverhalten der einzelnen Werkzeugteile führen können, eine elastische Verformung des Zapfens und/oder der Aussparung vermieden werden kann. In jedem Fall kann das eine Werkzeug von dem anderen durch Lösen der Befestigungsmittel entfernt werden, da die beiden Werkzeugteile nicht mittels Klemmpressung aufeinander festsitzen.

In einer besonders bevorzugten Ausführungsform weist sowohl der Zapfen als auch die Aussparung einen im wesentlichen ellipsenförmigen Querschnitt auf. Der ellipsenförmige Querschnitt zeichnet sich durch eine einfache Herstellbarkeit aus, wobei gleichzeitig eine sehr exakte Ausrichtung der beiden Werkzeugteile zueinander sowohl in axialer als auch radialer Richtung möglich ist. Zudem kann zweckmäßigerweise der Querschnitt derart symmetrisch ausgeführt sein, daß das eine Werkzeugteil in zwei zueinander um 180° um die Zapfenachse gedrehten Positionen mit dem anderen Werkzeugteil verbindbar ist.

Weiterhin ist es vorteilhaft, daß der Zapfen einen Abschnitt mit im wesentlichen konstanten Querschnittsmaß und einem im wesentlichen konischen Abschnitt hat, wobei der konische Abschnitt am äußeren Ende des Zapfens vorgesehen ist. Der Konuswinkel des konischen Abschnitts beträgt mit Vorteil zwischen 1 und 10°, vorzugsweise zwischen 1 und 5° und besonders bevorzugt etwa 3°. Der konische Abschnitt dient als Einfädelkonus und vereinfacht die Befestigung der beiden Werkzeugteile miteinander.

Wie bereits eingangs ausgeführt wurde, dienen Zapfen und Aussparung erfindungsgemäß weniger der Kraftübertragung, sondern nahezu ausschließlich der Ausrichtung der beiden Werkzeugteile zueinander. Folglich können die Kontaktflächen des Zapfens und der Aussparung auch relativ klein gewählt werden. Dies hat zudem den Vorteil, daß durch das Einbringen der Aussparung das Material nur wenig geschwächt wird. Daher ist es besonders vorteilhaft, wenn das Verhältnis I/d zwischen der Länge des Zapfens und dem größten Durchmesser des Zapfens kleiner als 1, vorzugsweise kleiner als 0,5 ist. Da der Zapfen einen nicht kreisförmigen Querschnitt aufweist, ist im allgemeinen auch der Durchmesser variierend. Der größte Durchmesser ist daher die größte Querausdehnung des Zapfens.

In einer weiteren, besonders bevorzugten Ausführungsform des erfindungsgemäßen Verbindungssystems ist eine Distanzscheibe vorgesehen, wobei die Distanzscheibe auf der einen Seiten einen Zapfen, der im wesentlichen dem Zapfen des ersten Werkzeugteils entspricht, und auf der anderen Seite eine Aussparung, die im wesentlichen der Aussparung des zweiten Werkzeugteils entspricht, aufweist. Die Distanzscheibe, die gegebenenfalls in verschiedenen unterschiedlichen Dicken bereitgestellt werden kann, ermöglicht es daher, daß die beiden Werkzeugteile mit unterschiedlichen Abständen - z.B. in radialer Richtung - zueinander montiert werden.

Weiterhin ist es zweckmäßig, daß die Mittel zur Befestigung der beiden Werkzeugteile aus zumindest einer Schraube, vorzugsweise einer Senkkopfspannschraube bestehen, die dafür vorgesehen ist, zur Befestigung der beiden Wergzeugteile durch ein Loch in dem einen Werkzeugteil in eine Gewindebohrung in dem anderen Werkzeugteil einzugreifen. Mit Hilfe der Schraube können daher die beiden Werkzeugteile, nachdem sie durch Einsetzen des Zapfens in die entsprechende Ausnehmung zueinander ausgerichtet sind, aufeinander befestigt werden. Besonders zweckmäßig ist es, wenn das Loch entweder in dem Zapfen oder in der Aussparung angeordnet ist und die Gewindebohrung in dem jeweils anderen Teil, Aussparung oder Zapfen, angeordnet ist. Dadurch wird das Verbindungssystem insgesamt sehr kompakt, da an der Verbindungsfläche zwischen den beiden Werkzeugteilen neben dem Zapfen bzw. der Aussparung keine zusätzlichen Löcher bzw. Gewindebohrungen bereitgestellt werden müssen.

Für manche Anwendungsfälle kann es von Vorteil sein, daß der Zapfen und die Aussparung jeweils mindestens einen Kanal aufweisen, wobei die beiden Kanäle zueinander korrespondieren, so daß im verbundenen Zustand ein Fluid, zum Beispiel ein Kühl- und/oder Schmierfluid, von dem einen Werkzeug über die Kanäle in das andere Werkzeug übertragen werden kann. Unter einem Fluid wird jedes gasförmige oder flüssige Mittel verstanden.

In einer weiteren besonders bevorzugten Ausführungsform hat das erste Werkzeugteil eine im wesentlichen ebene Anlagefläche, die den Zapfen umgibt, und das zweite Werkzeugteil hat eine im wesentlichen ebene Anlagefläche, welche die Aussparung umgibt, wobei die Ausrichtungsmittel so ausgebildet sind, daß die Anlageflächen von dem ersten und dem zweiten Werkzeugteil im verbundenen Zustand miteinander in Kontakt treten. Diese Anlageflächen dienen einerseits dazu, eventuell auf das eine Werkzeugteil ausgeübte Querkräfte aufzunehmen und zum anderen dazu, einen Anschlag bereitzustellen, so daß durch diese Anlageflächen der Abstand der beiden Werkzeugteile zueinander bestimmt wird.

Die vorliegende Erfindung betrifft nicht nur das Verbindungssystem als solches, sondern ebenso die einzelnen entsprechend für die Verwendung in dem Verbindungssystem ausgestalteten Werkzeugteile. In einer besonders bevorzugten Ausführungsform ist das eine Werkzeugteil ein Ausbohrkopf und der Zapfen mit nicht kreisförmigen Querschnitt ist für die Befestigung eines Schneidplattenhalters vorgesehen.

Der entsprechende Schneidplattenhalter weist dann die entsprechende Aussparung mit nicht kreisförmigem Querschnitt auf.

In einer besonders bevorzugten Ausführungsform ist der Schneidplattenhalter in zwei verschiedenen Positionen an dem Ausbohrkopf oder an einem an diesem vorgesehenen Werkzeugträger montierbar. Beispielsweise könnte die eine Position für die Vorwärtsbearbeitung und die andere Position für die Rückwärtsbearbeitung vorgesehen sein.

Weiterhin ist es zweckmäßig, daß der Ausbohrkopf einen Kanal für die Zuführung von Kühl- und oder Schmiermittel hat. Dieser Kanal hat vorzugsweise zwei Ausgänge, wobei jeder Ausgang einer der beiden Montagepositionen des Schneidplattenhalters am Ausbohrkopf bzw. am Werkzeugträger zugeordnet ist. Mit anderen Worten sind die beiden Ausgänge des Kanals so angeordnet, daß der eine Ausgang eine Kühl- und/oder Schmiermittelversorgung der Schneidkante der Schneidplatte auf dem Schneidplattenhalter in der einen Montageposition sicherstellt, während der andere Ausgang eine Kühl- und/oder Schmiermittelversorgung der Schneidkante in der anderen Montageposition sicherstellt.

Es ist besonders zweckmäßig, wenn die Ausgänge verschließbar sind, z.B. mit Hilfe einer Madenschraube. Dadurch kann abhängig von der gewählten Montageposition des Schneidplattenhalters an dem Werkzeugträger bzw. dem Ausbohrkopf einer der Kanalausgänge, der für die gewählte Positionierung der Schneidplatte nicht gebraucht wird, verschlossen werden, was Kühlmittel einspart und darüber hinaus zu einer geringeren Umweltbelastung führt.

Weitere Vorteile, Merkmale und Anwendungsmöglichkeiten der vorliegenden Erfindung werden deutlich anhand der folgenden Beschreibung zweier Ausführungsformen der Erfindung sowie den dazu gehörigen Figuren. Es zeigen:
- Figur 1: eine Draufsicht auf einen erfindungsgemäßen Bohrkopf,
- Figur 2: eine Draufsicht auf einen erfindungsgemäßen Schneidplattenhalter,
- Figur 3: verschiedene Ansichten des in Figur 1 gezeigten Bohrkopfes mit montiertem Schneidplattenhalter gemäß Figur 2,
- Figur 4: eine perspektivische Explosionsansicht des erfindungsgemäßen Bohrkopfes von Figur 1 in einer ersten Montageposition,
- Figur 5: eine perspektivische Explosionsansicht des erfindungsgemäßen Bohrkopfes nach Figur 1 in einer zweiten Montageposition,
- Figur 6: eine zweite Ausführungsform eines Bohrkopfes in vier verschiedenen Ansichten und
- Figur 7: einer perspektivische Ansicht auf die zweite Ausführungsform des erfindungsgemäßen Bohrkopfes.

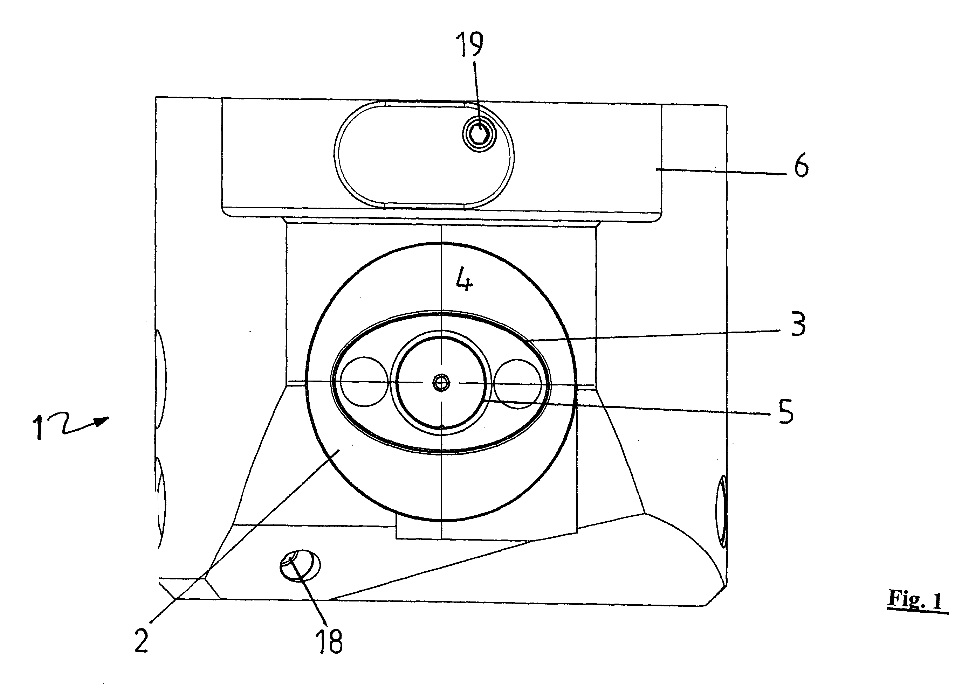

In Figur 1 ist eine erste Ausführungsform eines erfindungsgemäßen Bohrkopfes 1 gezeigt. Der Bohrkopf hat eine im wesentlichen zylindrische Form. In radialer Richtung ist in dem Bohrkopf 1 der Werkzeugträger aufgenommen, der überdies in radialer Richtung relativ zu dem Bohrkopf 1 eingestellt werden kann. Der Werkzeugträger 2 weist eine Anlagefläche 4 auf, in deren Zentrum ein im wesentlichen ellipsenförmiger Zapfen 3 angeordnet ist, der über die Anlagefläche 4 hervorragt. In der Mitte des ellipsenförmigen Zapfens 3 ist eine Gewindebohrung 5 vorgesehen, die zum Befestigen eines Schneidplattenhalters an dem Werkzeugträger 2 dient.

Der Ausbohrkopf 1 weist in seinem Grundkörper einen Kühl- bzw. Schmiermittelkanal auf (nicht gezeigt). Weiterhin sind zwei wahlweise verschließbare Ausgänge 18, 19 für Kühl- bzw. Schmiermittel vorgesehen. Weiterhin weist der Ausbohrkopf 1 eine im wesentlichen in Umfangsrichtung verlaufende Rille 6 auf, deren Funktion später noch erläutert wird.

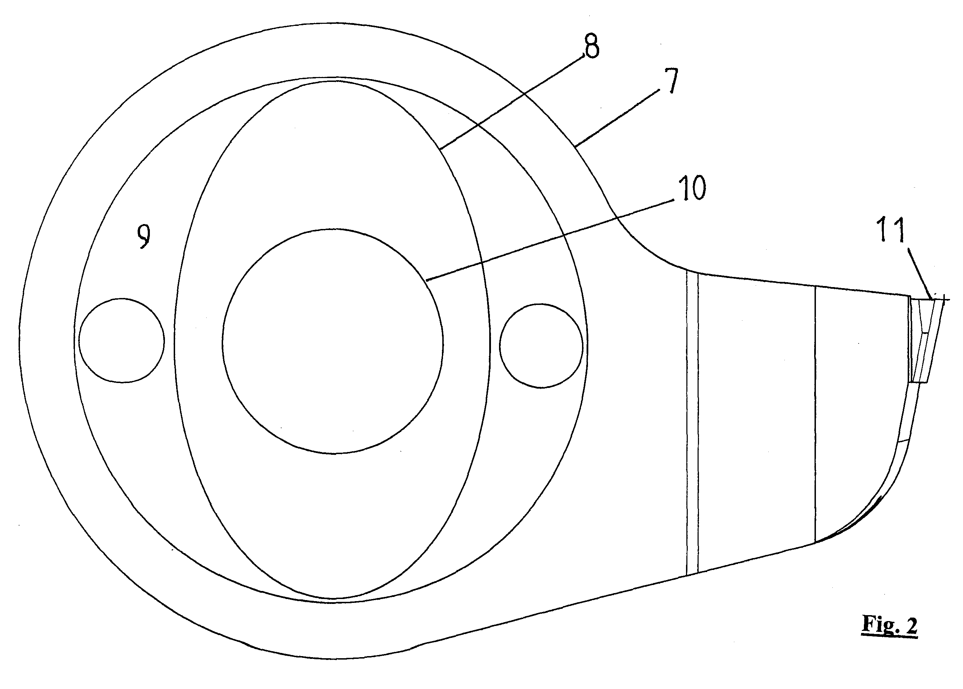

In Figur 2 ist ein Schneidplattenhalter 7 gezeigt, der dafür vorgesehen ist, an dem in Figur 1 gezeigten Ausbohrkopf 1 befestigt zu werden. Der Schneidplattenhalter 7 trägt eine Schneidplatte 11. Weiterhin hat er eine im wesentlichen ellipsenförmige Aussparung bzw. Mulde 8. Diese Aussparung 8 wird von einer Anlagefläche 9 umgeben. Weiterhin ist ein Durchgangsloch 10 vorgesehen, das innerhalb der Aussparung 8 angeordnet ist.

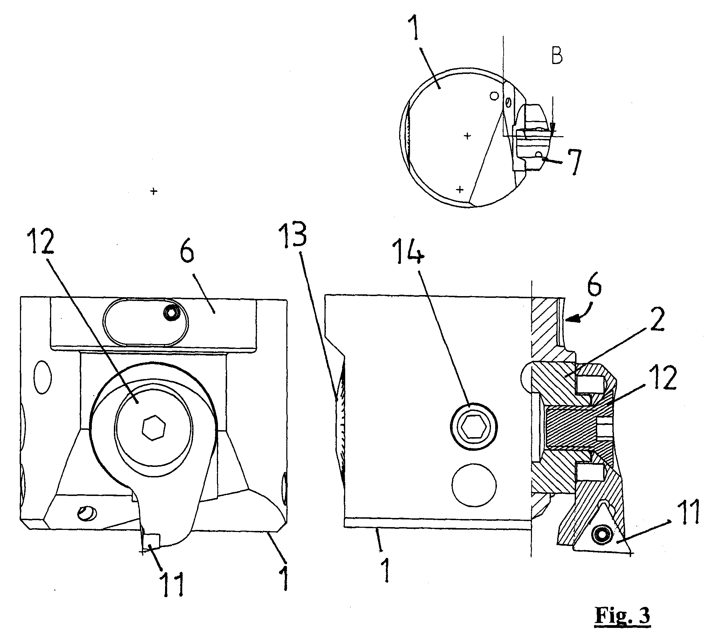

In der Figur 3 sind drei verschiedene Ansichten des Ausbohrkopfes 1 mit montiertem Schneidplattenhalter 7 der Figuren21 und 2 gezeigt. Rechts oben ist eine Ansicht von unten auf den Ausbohrkopf 1 mit montiertem Plattenhalter 7 zu erkennen. Die Ansicht links unten in Figur 3 entspricht im wesentlichen der Ansicht von Figur 1, wobei hier jedoch nur der Schneidplattenhalter 7 mit der Schneidplatte 11 an dem Bohrkopf 1 montiert ist. Die Montage des Schneidplattenhalters 7 an dem Bohrkopf 1 erfolgt mit Hilfe der Spannschraube 12, die durch das Loch 10 in dem Schneidplattenhalter 7 in die Gewindebohrung 5 im Bohrkopf 1 eingreift.

In der Abbildung rechts unten von Figur 3 ist ebenfalls eine Seitenansicht auf den Bohrkopf 1 gezeigt. Allerdings wurde hier der Bohrkopf 1 gegenüber der in Figur 3 links unten gezeigten Ansicht um 90 ° gedreht. Zudem ist der rechte Teil in der Abbildung rechts unten in Figur 3 als Schnittansicht entlang der Linie B, die in der Abbildung rechts oben in Figur 3 eingezeichnet ist, ausgeführt.

Man sieht die Justierschraube 13, mit deren Hilfe der Werkzeugträger 2 in radialer Richtung bewegt werden kann. Sobald der Werkzeugträger 3 in seiner gewünschten radialen Position ist, kann der Werkzeugträger 2 mit Hilfe der Fixierschraube 14 fixiert werden. In der Schnittansicht ist deutlich zu erkennen, daß der Schneidplattenhalter 7 mit Hilfe der Spannschraube 12 an dem Werkzeugträger 2 befestigt ist. Ebenso ist in dieser Ansicht die nutförmige Ausnehmung 6 zu erkennen. In dieser Figur wird deutlich, daß es die nutförmige Ausnehmung 6 erlaubt, daß der Schneidplattenhalter 7 in zwei verschiedenen, um 180° gedrehten Positionen an dem Werkzeugträger 2 befestigt werden kann.

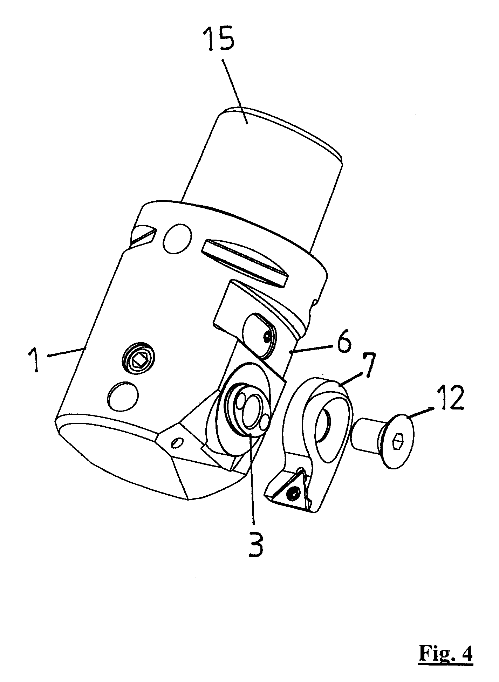

In Figur 4 ist zur Verdeutlichung eine perspektivische Explosionsansicht gezeigt, in der der Schneidplattenhalter 7 mit der darin aufgenommenen Schneidplatte 11 in der ersten Einbaurichtung orientiert ist. Deutlich zu erkennen ist der im wesentlichen ellipsenförmige Zapfen 3, der über die Anlagefläche des Werkzeugträger 2 hervorsteht. Der Schneidplattenhalter 7 wird mit seiner entsprechenden ellipsenförmigen Aussparung, die in dieser Position nicht zu erkennen ist, auf den Werkzeugträger 2 aufgesetzt und mit Hilfe der Spannschraube befestigt. In dieser Position kann der Bohrkopf in der Vorwärtsrichtung, d.h. mit einer Vorschubrichtung von links oben nach rechts unten in Figur 4, verwendet werden.

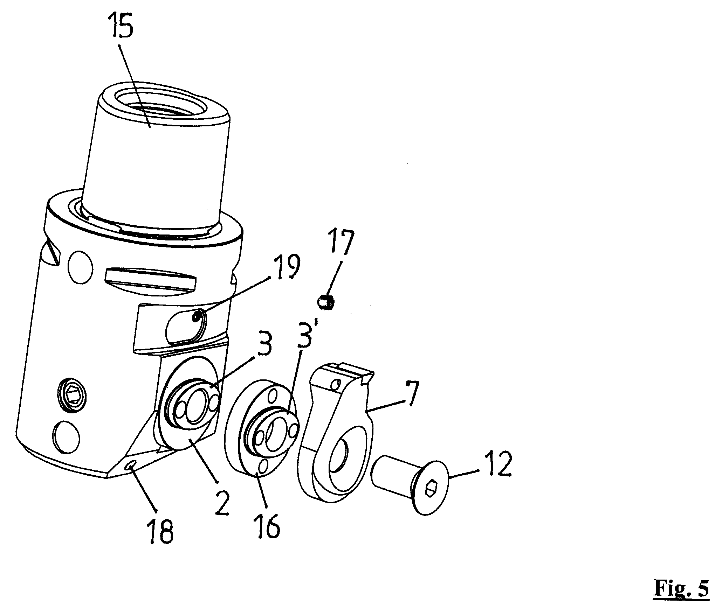

In Figur 5 ist eine perspektivische Explosionsansicht des Bohrkopfes 1 gezeigt, bei dem der Schneiplattenhalter 7 in seiner zweiten Befestigungsposition orientiert ist. Man sieht, daß der Schneidplattenhalter 7 im Vergleich zu der Orientierung, die in Figur 4 gezeigt ist, um 180° gedreht worden ist.

Generell könnte der Bohrkopf einschließlich der nutartigen Ausnehmung 6 derart ausgebildet sein, daß der Schneidplattenhalter 7 in seiner zweiten Position direkt auf den ellipsenförmigen Zapfen des Werkzeugträgers 2 aufgesetzt werden könnte. Da die nutförmige Ausnehmung 6 jedoch zu einer erheblichen Schwächung des Grundkörpers des Bohrkopfes 1 beiträgt, wird eine Distanzscheibe 16 verwendet, die prinzipiell als Verlängerung des Werkzeugträgers 2 dient.

Die Distanzscheibe 16 weist auf ihrer dem Werkzeugträger 2 zugewandten Seite eine im wesentlichen ellipsenförmige Aussparung auf (nicht gezeigt). Diese Aussparung entspricht in etwa der in dem Schneidplattenhalter 7 vorgesehenen Aussparung. Die Distanzscheibe 16 kann somit auf den Werkzeugträger 2 in der gleichen Art und Weise aufgesetzt werden, wie dies der Schneidplattenhalter 7 könnte. Die Distanzscheibe 16 weist an ihrer dem Werkzeugträger 2 abgewandten Seite ebenfalls einen im wesentlichen ellipsenförmigen Zapfen 3' auf, auf den wiederum der Schneidplattenhalter 7 aufgesetzt werden kann. Die Spannschraube 12, die hier länger ausgeführt ist als in der in Figur 4 gezeigten Position, kann nun sowohl die Distanzscheibe 16 als auch den Schneidplattenhalter 7 an dem Werkzeugträger 2 befestigen. Da in den beiden in den Figuren 4 und 5 gezeigten Montagepositionen die Schneidplatte 11 an einer anderen Position angeordnet ist und es im allgemeinen notwendig ist, gegebenenfalls Kühl- und/oder Schmiermittel möglichst direkt den Schneidkanten der Schneidplatte 11 zuzuführen, weist der Bohrkopf, wie oben bereits erwähnt wurde, zwei Auslässe 18, 19 für Kühl- bzw. Schmiermittel auf. In der in Figur 4 gezeigten Montageposition ist der eine Auslaß 19 mit Hilfe der Madenschraube 17 verschlossen. Wird nun die in Figur 5 dargestellte Montageposition angestrebt, so wird die Madenschraube 17 aus der Auslaßöffnung 19 herausgeschraubt und statt dessen in die Auslaßöffnung 18 eingeschraubt. Das Kühlmittel kann nun nicht mehr durch den Auslaß 18 aus dem Ausbohrkopf heraustreten, sondern ausschließlich aus dem Auslaß 19, der direkt neben der Schneidkante des Schneideinsatzes 11 liegt. Die in Figur 5 gezeigte Position ist für die Rückwärtsbearbeitung vorgesehen.

In den Figuren 4 und 5 ist weiterhin zu erkennen, daß der Ausbohrkopf 1 ein Schaftteil 15 hat, das für die Verbindung mit der entsprechenden Werkzeugmaschine vorgesehen ist.

Bei der in den Figuren 4 und 5 gezeigten Ausführungsform eines Bohrkopfes ist es vorgesehen, daß für die Werkstückbearbeitung sich der in den Figuren 4 und 5 abgebildete Bohrkopf um seine zentrale Achse dreht.

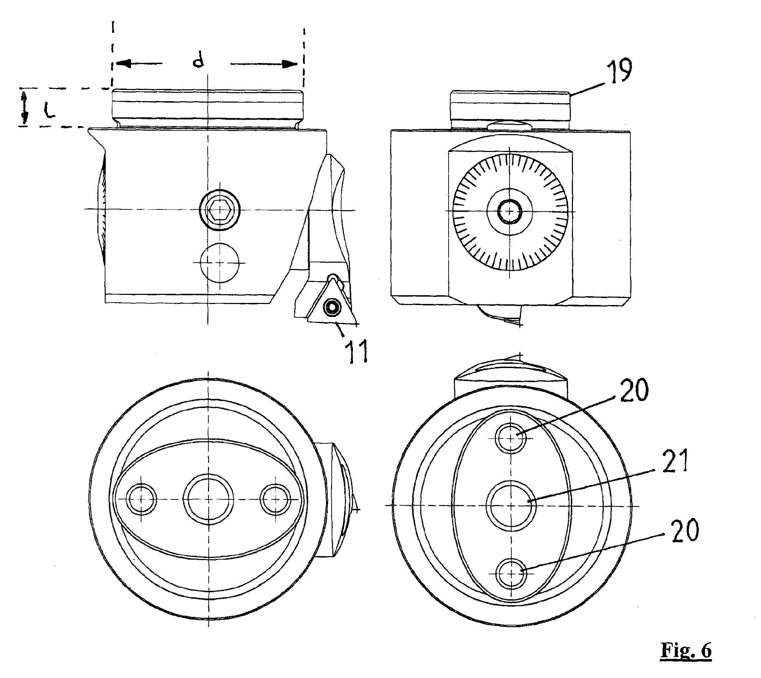

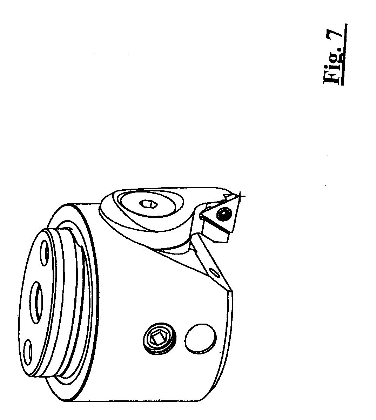

Bei sehr großen Bohrradien ist es häufig zweckmäßig, den Bohrkopf derart auszugestalten, daß er sich nicht um seine zentrale Achse dreht, sondern um eine außerhalb der Zentralachse liegende Achse. Ein solcher Ausbohrkopf ist in den Figuren 6 und 7 gezeigt. Mit Hilfe dieses Bohrkopfes können Bohrungen bzw. Löcher mit einem Radius, der deutlich größer als der Radius des in den Figuren 6 und 7 abgebildeten Bohrkopfes ist, ausgebohrt werden. Da es auch bei dieser Art von Bohrkopf häufig darauf ankommt, eine platzsparende Schnittstelle bereitzustellen, ist hier ein im wesentlichen ellipsenförmiger Vorsprung 19 für die Befestigung an der Werkzeugmaschine vorgesehen. Wie in den vier Ansichten von Figur 6 zu erkennen ist, ist der ellipsenförmige Zapfen 19 derart ausgebildet, daß das Verhältnis aus der Länge I des Zapfens zu dem maximalen Durchmesser d des Zapfens kleiner als 1 ist. Auch hier ist der Zapfen ohne Übermaß hergestellt, so daß die Verbindung aus dem ellipsenförmigen Zapfen 19 und der entsprechenden ellipsenförmigen Aussparung an der Werkzeugmaschine (nicht gezeigt) lediglich zur Orientierung der Werkzeugteile zueinander und nicht zur Kraftübertragung vorgesehen ist. Die Kraftübertragung erfolgt ausschließlich durch die entsprechenden Befestigungsmittel, die hier durch zwei Spannschrauben verwirklicht werden, die in die Gewindebohrungen 20 im Zapfen 19 eingreifen, verwirklicht wird.

Weiterhin ist hier eine zentrale Kühlkanalöffnung 21 vorgesehen, die dazu dient Kühl- bzw. Schmiermittel von der Werkzeugmaschine in den Ausbohrkopf zu übertragen.

In Figur 7 ist zur Verdeutlichung eine perspektivische Ansicht der zweiten Ausführungsform des Bohrkopfes gezeigt.

### Bezugszeichenliste

- 1: Bohrkopf
- 2: Werkzeugträger
- 3: Zapfen
- 4: Anlagefläche des Werkzeugträgers
- 5: Gewindebohrung
- 6: Rille
- 7: Schneidplattenhalter
- 8: Aussparung
- 9: Anlagefläche der Aussparung
- 10: Durchgangsloch
- 11: Schneidplatte
- 12: Spannschraube
- 13: Justierschraube
- 14: Fixierschraube
- 15: Schaft
- 16: Distanzscheibe
- 17: Madenschraube
- 18: Kühl- bzw. Schmiermittelauslaß
- 19: Kühl- bzw. Schmiermittelauslaß
- 20: Gewindebohrung
- 21: Kühlkanalöffnung

- d: Durchmesser des Zapfens
- l: Länge des Zapfens

## Patentansprüche

1. Verbindungssystem zur ausgerichteten Verbindung zweier Werkzeugteile mit Mitteln (12) zum Befestigen der beiden Werkzeugteile und Mitteln (3, 4, 8, 9) zum Ausrichten der beiden Werkzeugteile zueinander, wobei die Ausrichtungsmittel (3, 4, 8, 9) aus einem an dem ersten Werkzeugteil vorgesehen Zapfen (3) mit nichtkreisförmigem Querschnitt und einer an dem zweiten Werkzeugteil vorgesehenen Aussparung (8) bestehen, die derart aneinander angepaßt sind, daß zur Ausrichtung der beiden Werkzeugteile (1, 7) der Zapfen (3) in die Aussparung (8) eingreifen kann, und wobei das Querschnittsmaß des Zapfens (3) kleiner oder gleich dem Querschnittsmaß der Aussparung (8) ist.

2. Verbindungssystem nach Anspruch 1, **dadurch gekennzeichnet, daß** Querschnittsmaß des Zapfens (3) kleiner als das Querschnittsmaß der Aussparung (8) ist.

3. Verbindungssystem nach Anspruch 1 oder 2, **dadurch gekennzeichnet, daß** sowohl Zapfen (3) als auch Aussparung (8) einen im wesentlichen ellipsenförmigen Querschnitt aufweisen.

4. Verbindungssystem nach einem der Ansprüche 1 bis 3, **dadurch gekennzeichnet, daß** der Zapfen (3) einen Abschnitt mit im wesentlichen konstantem Querschnittsmaß und einen im wesentlichen konischen Abschnitt hat, wobei der konische Abschnitt am äußeren Ende des Zapfens (3) vorgesehen ist.

5. Verbindungssystem nach Anspruch 4, **dadurch gekennzeichnet, daß** der konische Abschnitt einen Konuswinkel zwischen 1 und 10°, vorzugsweise zwischen 1 und 5°, besonders bevorzugt von etwa 3° aufweist.

6. Verbindungssystem nach einem der Ansprüche 1 bis 5, **dadurch gekennzeichnet, daß** das Verhältnis I/d zwischen der Länge des Zapfens (3) und dem Durchmesser des Zapfens (3) kleiner als 1, vorzugsweise kleiner als 0,5 ist.

7. Verbindungssystem nach einem der Ansprüche 1 bis 6, **dadurch gekennzeichnet, daß** eine Distanzscheibe (16) vorgesehen ist, wobei die Distanzscheibe (16) auf der einen Seite einen Zapfen, der im wesentlichen dem Zapfen des ersten Werkzeugteils entspricht, und auf der anderen Seite eine Aussparung, die im wesentlichen der Aussparung des zweiten Werkzeugteils entspricht, aufweist.

8. Verbindungssystem nach einem der Ansprüche 1 bis 7, **dadurch gekennzeichnet, daß** die Mittel zur Befestigung der beiden Werkzeugteile aus zumindest einer Schraube (12), vorzugsweise einer Senkkopfspannschraube bestehen, die dafür vorgesehen ist, zur Befestigung der beiden Werkzeugteile durch ein Loch (10) in dem einen Werkzeugteil in eine Gewindebohrung (5) in dem anderen Werkzeugteil einzugreifen.

9. Verbindungssystem nach Anspruch 8, **dadurch gekennzeichnet, daß** das Loch (10) entweder in dem Zapfen (3) oder in der Aussparung (8) angeordnet ist, und die Gewindebohrung (5) in dem jeweils anderen Teil, Aussparung (8) oder Zapfen (3), angeordnet ist.

10. Verbindungssystem nach einem der Ansprüche 1 bis 9, **dadurch gekennzeichnet, daß** der Zapfen 83) und die Aussparung (8) jeweils einen Kanal (21) aufweisen, wobei die beiden Kanäle zueinander korrespondieren, so daß im verbundenen Zustand ein Fluid, z. B. ein Kühl- und/oder Schmierfluid, von dem einen Werkzeugteil über die Kanäle in das andere Werkzeugteil übertragen werden kann.

11. Verbindungssystem nach einem der Ansprüche 1 bis 10, **dadurch gekennzeichnet, daß** das erste Werkzeugteil eine im wesentlichen ebene Anlagefläche (4) hat, die den Zapfen (3) umgibt, und das zweite Werkzeugteil eine im wesentlichen ebene Anlagefläche (9) hat, die die Aussparung (8) umgibt, wobei die Ausrichtungsmittel so ausgebildet sind, daß die Anlageflächen (4, 9) von dem ersten und dem zweiten Werkzeugteil im verbundenen Zustand miteinander in Kontakt treten.

12. Werkzeugteil zur Verwendung mit einem Verbindungssystem nach einem der Ansprüche 1 bis 11, **dadurch gekennzeichnet, daß** das Werkzeugteil einen Zapfen (3) mit nicht kreisförmigem Querschnitt aufweist.

13. Werkzeugteil nach Anspruch 12, **dadurch gekennzeichnet, daß** der Zapfen (3) einen im wesentlichen ellipsenförmigen Querschnitt aufweist.

14. Werkzeugteil nach Anspruch 12 oder 13, **dadurch gekennzeichnet, daß** der Zapfen (3) einen Abschnitt mit im wesentlichen konstantem Querschnittsmaß und einen im wesentlichen konischen Abschnitt hat, wobei der konische Abschnitt am äußeren Ende des Zapfens (3) vorgesehen ist, wobei vorzugsweise der konische Abschnitt einen Konuswinkel zwischen 1 und 10°, vorzugsweise zwischen 1 und 5 °, besonders bevorzugt von etwa 3° aufweist.

15. Werkzeugteil nach einem der Ansprüche 12 bis 14, **dadurch gekennzeichnet, daß** das Verhältnis I/d zwischen der Länge des Zapfens (3) und dem Durchmesser des Zapfens (3) kleiner als 1 ist.

16. Werkzeugteil nach einem der Ansprüche 12 bis 15, **dadurch gekennzeichnet, daß** es ein Ausbohrkopf ist und der Zapfen (3) zur Befestigung eines Schneidplattenhalters (7) vorgesehen ist.

17. Werkzeugteil zur Verwendung mit einem Verbindungssystem nach einem der Ansprüche 1 bis 11, **dadurch gekennzeichnet, daß** eine Aussparung (8) mit nicht kreisförmigem Querschnitt vorgesehen ist.

18. Werkzeugteil nach Anspruch 17, **dadurch gekennzeichnet, daß** die Aussparung (8) einen im wesentlichen ellipsenförmigen Querschnitt aufweist.

19. Werkzeugteil nach Anspruch 17 oder 18, **dadurch gekennzeichnet, daß** das Verhältnis t/d zwischen der Tiefe der Aussparung (8) und dem Durchmesser der Aussparung (8) kleiner als 1, vorzugsweise kleiner als 0,5 ist.

20. Werkzeugteil nach einem der Ansprüche 17 bis 19, **dadurch gekennzeichnet, daß** es ein Schneidplattenhalter (7) ist.

21. Werkzeugteil zur Verwendung mit einem Verbindungssystem nach Anspruch 7 oder nach einem der auf Anspruch 7 rückbezogenen Ansprüche, **dadurch gekennzeichnet, daß** es sowohl einen Zapfen (3) als auch eine Aussparung (8) mit jeweils nicht kreisförmigem Querschnitt hat.

22. Werkzeugteil nach Anspruch 21, **dadurch gekennzeichnet, daß** sowohl Zapfen (3) als auch Aussparung (8) einen im wesentlichen ellipsenförmigen Querschnitt haben.
